# EUROPEAN PATENT APPLICATION

(11) **EP 4 597 709 A1**
(43) Date of publication of application: **06.08.2025**
(21) Application number: 23870788.9
(22) Date of filing: 26.09.2023
(51) Int. Cl.: H01M 50/249, H01M 50/244, H01M 50/296, H01M 50/298, H01M 50/569, H01M 50/502, H01M 50/588, H01M 50/59

(54) **BATTERY TRAY ASSEMBLY, BATTERY PACK AND VEHICLE**

(30) Priority: 30.09.2022 CN 202222639056 U
(71) Applicant: BYD Company Limited, Shenzhen, Guangdong 518118 (CN)
(72) Inventor: LI, Jianqiang, Shenzhen, Guangdong 518118 (CN); HENG, Ming, Shenzhen, Guangdong 518118 (CN); LIU, Zhibin, Shenzhen, Guangdong 518118 (CN); TANG, Jianglong, Shenzhen, Guangdong 518118 (CN)
(74) Representative: Mathys & Squire
(86) International application number: PCT/CN2023/121477
(87) International publication number: WO 2024/067559

(57) **Abstract**

A battery tray assembly (10), a battery pack (1) and a vehicle. The battery tray assembly (10) comprises: a tray (11) and electrically conductive members (12), the tray (11) forming a mounting space for accommodating battery modules (20) and insulating the battery modules (20) from each other, and the tray (11) being provided with detection ports (111); and the electrically conductive members (12) are at least partly arranged inside the tray (11) and are electrically connected to preset potential points, and the electrically conductive members (12) are at least partly exposed at the detection ports (111).

## Description

### CROSS-REFERENCE TO RELATED APPLICATIONS

This application claims priority to and benefits of Chinese Patent Application No. 202222639056.4, filed on September 30, 2022. The entire content of the above-referenced application is incorporated herein by reference.

### FIELD

The present disclosure relates to a battery tray assembly, a battery pack, and a vehicle.

### BACKGROUND

In the related art, a battery tray assembly in a battery pack includes an insulation detection member to detect electric leakage in the battery pack. In the related art, the insulation detection member of the battery tray assembly is constructed as an aluminum bar, and when the battery pack receives a mechanical impact, the entire aluminum bar may come into contact with multiple battery cores of the battery, causing a short circuit and arc fire between the battery cores. Such a battery pack is not safe.

### SUMMARY

The present disclosure is intended to resolve at least one of the technical problems of the related art. Therefore, an objective of the present disclosure is to provide a battery tray assembly, which achieves the concealment of an electrically conductive member, to prevent the electrically conductive member from being unintentionally contacted when a battery module receives an external force, thereby ensuring the safety of use of a battery pack.

The present disclosure further provides a battery pack having the battery tray assembly.

The present disclosure further provides a vehicle having the battery pack.

The battery tray assembly according to the present disclosure includes: a tray, a mounting space configured to accommodate a battery module being formed on the tray, the tray being provided with a detection port, and the tray being configured to be insulated from the battery module; and an electrically conductive member, the electrically conductive member being at least partly arranged inside the tray, the electrically conductive member being electrically connected to a preset potential point, and the electrically conductive member being at least partly exposed at the detection port to detect whether an electrically conductive medium is present in the detection port.

According to the battery tray assembly of the present disclosure, the detection port is provided, so that at least a part of the electrically conductive member is exposed at the detection port. In this way, whether the electrically conductive medium is present in the tray can be detected while preventing the electrically conductive member from being unintentionally contacted when the battery module receives an external force, and the concealment of the electrically conductive member is realized, thereby ensuring the safety of use of the battery pack.

The battery pack according to the present disclosure includes the battery tray assembly.

The battery pack according to the present disclosure includes: a battery tray assembly, the battery tray assembly being configured as the battery tray assembly according to any one of the above examples; and a battery module, the battery module being arranged in the mounting space. Because the battery pack according to the present disclosure includes the battery tray assembly of the above example, the detection of electric leakage of the battery pack can be implemented more efficiently and accurately with higher sensitivity, and the concealment of the electrically conductive member is realized, to prevent the electrically conductive member from contacting with two battery cores at the same time, thereby ensuring the safety of use of the battery pack.

The vehicle according to the present disclosure includes the battery pack.

The vehicle according to the present disclosure includes the battery pack of the above example. Because the vehicle according to the present disclosure includes the battery pack of the above example, the vehicle can detect whether leakage of an electrolyte solution or accumulation of water occurs in the battery pack, and provide a warning to alert the user in a timely manner, thereby avoiding a safety accident.

Other aspects and advantages of the present disclosure will be given in the following description, some of which will become apparent from the following description or may be learned from practices of the present disclosure.

### BRIEF DESCRIPTION OF THE DRAWINGS

FIG. 1 is a structural diagram of a battery pack according to an example of the present disclosure;
FIG. 2 is an enlarged view of an encircled part A in FIG. 1;
FIG. 3 is a structural diagram of a tray according to an example of the present disclosure;
FIG. 4 is an enlarged view of an encircled part B in FIG. 3;
FIG. 5 is a structural diagram of an interior of a base plate according to an example of the present disclosure; and
FIG. 6 is a structural diagram of an electrically conductive member according to an example of the present disclosure.

### List of reference numerals:

battery pack 1;
battery tray assembly 10; tray 11; detection port 111; base plate 112; side plate 113; support rib 114; electrically conductive member 12; extension portion 121; connection portion 122; frame 13;
battery module 20; battery core 21.

### DETAILED DESCRIPTION

Examples of the present disclosure will be described in detail below with reference to the accompanying drawings in which the same or like reference characters refer to the same or like elements or elements having the same or like functions throughout. The examples described below by reference to the accompanying drawings are exemplary and are intended for explanation only and are not to be construed as limiting the present disclosure.

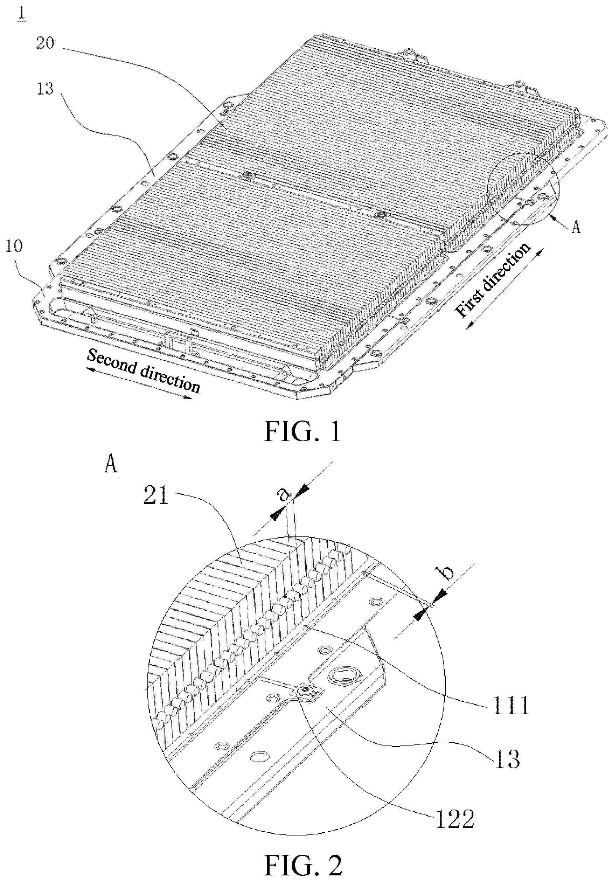

A battery tray assembly 10 according to the examples of the present disclosure is described below with reference to FIG. 1 to FIG. 6.

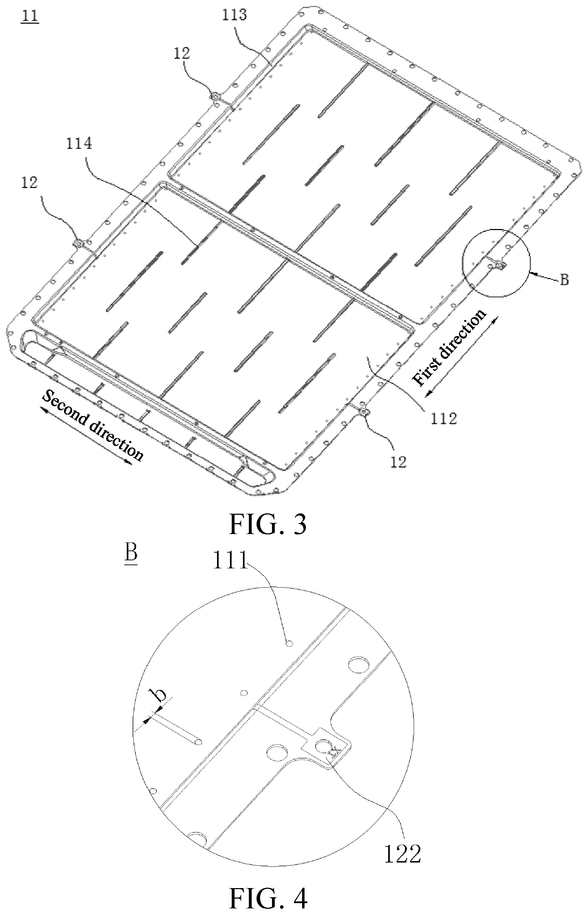

As shown in FIG. 3, the battery tray assembly 10 according to the present disclosure includes a tray 11 and an electrically conductive member 12. A mounting space configured to accommodate a battery module 20 is formed on the tray 11. The tray 11 is provided with a detection port 111. The tray 11 is configured to be insulated from the battery module 20. The electrically conductive member 12 is at least partly arranged inside the tray 11. The electrically conductive member 12 is electrically connected to a preset potential point. The electrically conductive member 12 is at least partly exposed at the detection port 111 to detect whether an electrically conductive medium is present in the detection port 111. In some examples, the tray 11 is constructed as an insulating part, and the battery module 20 is mounted in the mounting space. After the electrically conductive medium enters the battery tray assembly 10, the electrically conductive medium is present in a gap between the battery module 20 and the tray 11. The electrically conductive medium can conduct current. After the electrically conductive medium flows along the tray 11 to the detection port 111, the electrically conductive member 12 comes into contact with the electrically conductive medium to form an electrical connection, and the electrically conductive medium flowing along the tray 11 electrically connects the battery module 20 and the electrically conductive member 12. Because the electrically conductive member 12 is connected to the preset potential point, i.e., a potential of the electrically conductive member 12 is equal to that of the preset potential point, whether the electrically conductive medium is present in the battery pack 1 tray 11 can be detected by detecting a potential difference between the battery module 20 and the electrically conductive member 12 at this moment.

It can be understood that when no electrically conductive medium is present in the mounting space, the electrically conductive member 12 is used to provide a first potential signal between the battery module 20 and the preset potential point, and when the electrically conductive medium is present in the mounting space, the electrically conductive member 12 connects the battery module 20 to the preset potential point through the electrically conductive medium to provide a second potential signal between the battery module 20 and the preset potential point. The battery management system of the battery pack 1 monitors the potential signal in real time. The first potential signal and the second potential signal can represent whether the electrically conductive medium is present in the mounting space, When the potential signal between the battery module 20 and the electrically conductive member 12 changes (i.e., the battery management system detects that the potential signal changes from the first potential signal to the second potential signal), it may be determined that the electrically conductive medium is present in the mounting space, i.e., electric leakage occurs in the battery pack 1.

In addition, the electrically conductive medium may be an electrolyte solution leaked from the battery pack 1, water infiltrated from the outside due to poor sealing of the pack, condensed water generated inside the pack, accumulated water in the tray 11 having electrically conductive positive and negative ions, or other mediums capable of electrically connecting the battery module 20 and the electrically conductive member 12.

Further, the preset potential point is generally located outside the mounting space. The electrically conductive member 12 is arranged on the tray 11, the entire electrically conductive member 12 may be arranged in the mounting space, the electrically conductive member 12 is electrically connected to another electrically conductive structure, and the another electrically conductive structure can electrically connect the electrically conductive member 12 to the preset potential point. Alternatively, the electrically conductive member 12 is arranged on the tray 11, a part of the electrically conductive member 12 is arranged in the mounting space, and the other part of the electrically conductive member 12 extends out of the mounting space to be connected to the preset potential point, which is not limited herein.

In some examples, to avoid a short circuit between the battery cores 21 caused by a large-area contact between the battery module 20 and the electrically conductive member 12 after the battery pack 1 is impacted by an external force, at least a part of the electrically conductive member 12 is arranged in the tray 11; and to enable the electrically conductive member 12 to detect the electrically conductive medium, it is necessary to make at least a part of the electrically conductive member 12 contact with the electrically conductive medium flowing in the mounting space, and therefore, the detection port 111 is provided on at least part of an inner wall of the mounting space, so that at least a part of the electrically conductive member 12 is exposed at the detection port 111, so that the electrically conductive member 12 can detect the electrically conductive medium when the electrically conductive medium flows to the detection port 111.

According to the battery tray assembly 10 of the present disclosure, the detection port 111 is provided, so that at least a part of the electrically conductive member 12 is exposed at the detection port 111. In this way, whether the electrically conductive medium is present in the tray 11 can be detected while preventing the electrically conductive member 12 from being unintentionally contacted when the battery module 20 receives an external force, and the concealment of the electrically conductive member 12 is realized, thereby ensuring the safety of use of the battery pack 1.

According to some examples of the present disclosure, as shown in FIG. 3, the tray 11 includes a base plate 112 and a side plate 113. The detection port 111 is formed on the base plate 112. The side plate 113 is arranged on an outer periphery of the base plate 112. The mounting space configured to accommodate the battery module 20 is defined by the side plate 113 and the base plate 112. In some examples, the electrically conductive medium flows along a bottom of the tray 11 under gravity, the base plate 112 constitutes a bottom wall of the mounting space of the tray 11, and the detection port 111 is provided in the base plate 112 to cause the electrically conductive medium to flow to the detection port 111 under gravity. In some examples, at least a part of the electrically conductive member 12 is located at the lowest point of the detection port 111, and when the electrically conductive medium flows to the detection port 111, the electrically conductive member 12 can detect the electrically conductive medium immediately, so that electric leakage of the battery pack 1 can be determined in a timely manner, so as to ensure the safety of use of the battery pack 1. In some examples, the base plate 112 includes a first surface facing the mounting space, the detection port 111 is formed on the first surface of the base plate 112 and extends in a direction away from the first surface to form a detection space in the base plate 112, the detection space is in communication with the mounting space through the detection port 111, the electrically conductive medium on the tray 11 enters the detection space through the detection port 111, at least a part of the electrically conductive member 12 is located at the lowest point of the detection space, and the detection space is configured to gather the electrically conductive medium, thereby accurately and quickly detecting the electrically conductive medium.

According to some examples of the present disclosure, as shown in FIG. 1 to FIG. 2, the battery tray assembly 10 further includes a frame 13. The frame 13 is provided on at least a part of an outer periphery of the tray 11. At least a part of the electrically conductive member 12 extends to the frame 13 and is electrically connected to the frame 13. The frame 13 is configured as a grounding member. In some examples, the frame 13 is arranged on at least a part of the outer periphery of the tray 11, and the frame 13 is grounded. In some examples, the frame 13 may be configured as a metal piece. The frame 13 is configured to improve the rigidity of the tray 11. The frame 13 may be connected to a body of a vehicle by a grounding wire and thus grounded. At least a part of the electrically conductive member 12 is connected to the frame 13 and thus grounded.

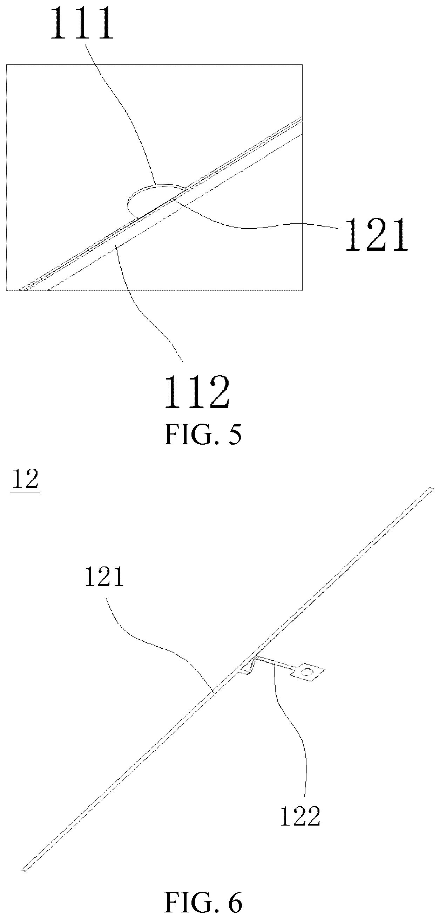

According to some examples of the present disclosure, as shown in FIG. 5 to FIG. 6, the electrically conductive member 12 includes an extension portion 121 and a connection portion 122. The extension portion 121 is formed in the base plate 112, and at least a part of the extension portion 121 faces the detection port 111 so as to be exposed to the detection port 111. One end of the connection portion 122 is connected to the extension portion 121, and another end of the connection portion 122 extends to the side plate 113 and is electrically connected to the frame 13. In some examples, as shown in FIG. 6, the extension portion 121 of the electrically conductive member 12 is located in the base plate 112 and at least a part of the extension portion 121 is exposed at the detection port 111 to detect the electrically conductive medium, the connection portion 122 of the electrically conductive member 12 is connected to the extension portion 121 and extends in a direction away from the extension portion 121, and the connection portion 122 is electrically connected to the frame 13, so that the electrically conductive member 12 is grounded. In some examples, a plurality of connection portions 122 are connected to the extension portion 121, the connection portions 122 are connected to the frame 13 by fasteners, and the frame 13 is connected to a body of a vehicle to form a transmission path for electric leakage detection. The extension portion 121 may be arranged to fit the shape of the base plate 112, and the connection portion 122 may be arranged to fit the shape of the side plate 113. The connection portion 122 may be configured to have a curved shape arranged on the side plate, and is not limited to a linear structure fitting the side plate 113 as shown in FIG. 6.

It should be noted that the connection portion 122 being located on the side plate 113 may mean that the connection portion 122 is located inside the side plate 113, or may mean that the connection portion 122 is located on a surface of the side plate 113 close to the mounting space, which is not limited herein.

According to some examples of the present disclosure, as shown in FIG. 4, a plurality of detection ports 111 are configured, the extension portion 121 extends in a first direction, the plurality of detection ports 111 are sequentially arranged in the first direction, and the extension portion 121 respectively corresponds to the plurality of detection ports 111. In some examples, the plurality of detection ports 111 may be distributed at different positions on the base plate 112 along a plurality of directions of the base plate 112 to detect in a timely manner the electrically conductive medium present in the mounting space. In some examples, the plurality of detection ports 111 are arranged in the first direction of the base plate 112 and are sequentially arranged in the first direction, and when the electrically conductive medium flows through any one of the detection ports 111, the extension portion 121 can detect the electrically conductive medium when the electrically conductive medium flowing through any one of the detection ports 111 because the extension portion 121 corresponds to the plurality of detection ports 111. As such, the battery pack 1 can accurately detect an electric leakage region, and more accurate and sensitive detection is achieved. In some examples, the first direction is a stacking direction of the battery cores 21 of the battery module 20.

According to some examples of the present disclosure, as shown in FIG. 3, a support rib 114 projecting toward the mounting space is formed on the base plate 112, and the support rib 114 is configured to support the battery module 20 and space the battery module 20 apart from a bottom wall of the mounting space. In some examples, the base plate 112 is configured as a bottom wall of the mounting space. When the electrically conductive medium enters the battery tray assembly 10, the electrically conductive medium is present in the gap between the battery module 20 and the tray 11. To prevent the electrically conductive medium from infiltrating into the battery module 20 to cause electrolysis of an aluminum housing of the battery core 21, a support rib 114 projecting toward the mounting space is arranged on the base plate 112 to support the battery module 20, so that the battery module 20 is spaced apart from the base plate 112 by a gap. As such, a space is provided for the flow of the electrically conductive medium, to prevent the electrically conductive medium from directly soaking the battery pack 20. When the battery pack 1 shakes, the battery pack 20 is electrically connected to the electrically conductive member 12 by the electrically conductive medium, so that water entering the pack or liquid leaked from the pack can be detected. In some examples, the support ribs 114 extend in the first direction of the base plate 112 and are arranged at intervals in the second direction. In some examples, the battery cores 21 in the battery module 20 extend in the second direction and are arranged at intervals in the first direction, and the support rib 114 supports the battery module 20 and spaces the battery module 20 apart from the bottom wall of the mounting space.

According to some examples of the present disclosure, as shown in FIG. 5, at least a part of the electrically conductive member 12 is arranged in the tray 11 by integral molding. In some examples, In some examples, the extension portion 121 of the electrically conductive member 12 is integrally formed with the base plate 112 of the tray 11 and is located in the base plate 112, the connection portion 122 of the electrically conductive member 12 is integrally formed with the side plate 113 of the tray 11 and is located in the side plate 113, a free end of the connection portion 122 is electrically connected to the frame 13, and the electrically conductive member 12 and the tray 11 are molded by hot pressing, so that the costs of the battery tray assembly 10 can be effectively reduced. In addition, the extension portion 121 of the electrically conductive member 12 is pre-buried in the base plate 112, and detection ports 111 are provided at equal intervals on the base plate 112 only in an arrangement direction of the battery cores 21 for electric leakage detection. This can reduce as much as possible the number of battery cores 21 contacted by the electrically conductive member 12 when the battery pack 1 receives a mechanical impact, to avoid a short circuit. The extension portion 121 covers a length of all the stacked battery cores 21, and when the electrically conductive medium comes into contact with the electrically conductive member 12 at the detection port 111, an electric leakage signal can be triggered, so that the battery pack 1 can feed back an electric leakage region.

In some examples of the present disclosure, the battery tray assembly 10 includes a tray 11, an electrically conductive member 12, and a frame 13. The tray 11 is configured as an insulator and includes a base plate 112 and a side plate 113. The base plate 112 includes a first surface facing the mounting space. The detection port 111 is formed on the first surface of the base plate 112 and extends in a direction away from the first surface to form a detection space in the base plate 112. The detection space is in communication with the mounting space through the detection port 111. The side plate 113 is arranged on an outer periphery of the base plate 112. The mounting space is defined by the side plate 113 and the base plate 112. The battery module 20 may be placed in the mounting space. Support ribs 114 projecting toward the mounting space are arranged on the base plate 112. The support ribs 114 extend in the first direction of the base plate 112 and are arranged at intervals in the second direction. The frame 13 is arranged on an outer periphery of the base plate 112. The frame 13 is grounded. In an arrangement direction of the battery cores 21 of the battery module 20, a plurality of detection ports 111 are provided at equal intervals on the first surface of the base plate 112. Each detection port 111 faces an end portion of only one battery core 21. The electrically conductive member 12 includes an extension portion 121 and a connection portion 122. The extension portion 121 is formed in the base plate 112 of the tray 11 and at least a part of the extension portion 121 is located at the lowest point of the detection space. The extension portion 121 covers a length of all the stacked battery cores 21. The connection portion 122 is connected to the extension portion 121 and extends in a direction away from the extension portion 121, and the connection portion 122 is electrically connected to the frame 13, so that the electrically conductive member 12 is grounded.

After the electrically conductive medium enters the battery tray assembly 10, the electrically conductive medium may flow along the base plate 112 of the tray 11 to the detection port 111 and enter the detection space, and the extension portion 121 comes into contact with the electrically conductive medium to form an electrical connection between the battery module 20 and the electrically conductive member 12, so that the connection portion 122 is electrically connected to the frame 13 and thus grounded. The potential difference between the battery module 20 and the electrically conductive member 12 changes after the electrically conductive medium comes into contact with the electrically conductive member 12, and the battery pack 1 can detect electric leakage in a time manner and accurately find an electric leakage region.

According to the battery tray assembly 10 of the present disclosure, multi-point detection of the electrically conductive medium in the tray 11 is realized by integrally molding the electrically conductive member 12 and the tray 11 and providing a plurality of detection ports 111 on the base plate 112 of the tray 11. The multi-point detection is faster and can reduce the probability of missed detection. As such, electric leakage detection can be implemented more accurately with higher sensitivity in a timely manner, thereby ensuring the safety of use of the battery pack 1.

The battery pack 1 according to the present disclosure is briefly described below.

As shown in FIG. 1 to FIG. 2, the battery pack 1 according to the present disclosure includes a battery tray assembly 10 and a battery module 20. The battery tray assembly 10 is configured as the battery tray assembly 10 according to any one of the above examples. The battery module 20 is arranged in the mounting space. Because the battery pack 1 according to the present disclosure includes the battery tray assembly 10 of the above example, the detection of electric leakage of the battery pack 1 can be implemented more efficiently and accurately with higher sensitivity, and the concealment of the electrically conductive member 12 is realized, to ensure the safety of use of the battery pack 1.

According to some examples of the present disclosure, as shown in FIG. 2, the battery module 20 includes a plurality of battery cores 21, and one of the detection ports 111 faces an end portion of one of the battery cores 21 in an extending direction of the battery core 21. In some examples, each battery core 21 has two end portions in its extending direction, and one detection port 111 directly faces an end portion of only one battery core 21, so that the electrically conductive member 12 in the detection port 111 is prevented from contacting with two battery cores 21 at the same time when a point of the battery pack 1 is mechanically impacted, thereby avoiding a short circuit.

According to some examples of the present disclosure, as shown in FIG. 2 and FIG. 4, a thickness of the battery core 21 is defined as a, a dimension of the detection port 111 in a thickness direction of the battery core 21 is defined as b, and a>b. In some examples, it can be understood that the detection port 111 may be configured in any shape, and b may be a maximum dimension of the detection port 111 in the thickness direction of the battery core 21. In this case, b may be a diameter of a circumscribed circle of the detection port 111, and b satisfies: a>b, so as to prevent the electrically conductive member 12 from contacting with two battery cores 21 at the same time while ensuring that the electrically conductive member 12 can detect the electrically conductive medium through the detection port 111.

According to some examples of the present disclosure, as shown in FIG. 2 and FIG. 4, a thickness a of the battery core 21 and a dimension b of the detection port 111 in a thickness direction of the battery core 21 satisfy: 0.3a<b≤0.7a. In some examples, the detection port 111 may be configured to be circular, b is a diameter of the detection port 111, and b satisfies: 0.3a<b≤0.7a. This can ensure that the electrically conductive member 12 can detect the electrically conductive medium through the detection port 111, and can also prevent the electrically conductive member 12 in the detection port 111 from contacting with two battery cores 21 at the same time when a point of the battery pack 1 is mechanically impacted, thereby avoiding a short circuit and improving the accuracy of detection of liquid leaked from or water entering the pack.

The vehicle according to the present disclosure is briefly described below.

The vehicle according to the present disclosure includes the battery pack 1 of the above example. Because the vehicle according to the present disclosure includes the battery pack 1 of the above example, the vehicle can detect whether leakage of an electrolyte solution or accumulation of water occurs in the battery pack 1, and provide a warning to alert the user in a timely manner, thereby avoiding a safety accident.

Based on the above, according to the battery tray assembly 10 of the present disclosure, multi-point detection of the electrically conductive medium in the tray 11 is realized by integrally molding the electrically conductive member 12 and the tray 11 and providing a plurality of detection ports 111 on the base plate 112 of the tray 11. The multi-point detection is faster and can reduce the probability of missed detection. As such, electric leakage detection can be implemented more accurately with higher sensitivity in a timely manner. In addition, the electrically conductive member 12 is concealed in the tray 11. The detection port 111 is provided, so that at least a part of the electrically conductive member 12 is exposed at the detection port 111. In this way, whether the electrically conductive medium is present in the tray 11 can be detected while preventing the electrically conductive member 12 from being unintentionally contacted when the battery module 20 receives an external force, so as to avoid a short circuit in the battery pack 1, thereby ensuring the safety of use of the battery pack 1.

In the description of the specification, the description with reference to the terms "an example", "some embodiments", "exemplary examples", "example", "specific example", or "some example" and so on means that specific features, structures, materials or characteristics described in connection with the embodiment or example are embraced in at least one embodiment or example of the present invention. In this specification, exemplary descriptions of the foregoing terms do not necessarily refer to the same embodiment or example. Moreover, the described specific features, structures, materials or characteristics may be combined in any suitable manner in one or more examples.

Although the examples of the present disclosure have been shown and described, a person of ordinary skill in the art should understand that various changes, modifications, replacements and variations may be made to the examples without departing from the principles and spirit of the present disclosure, and the scope of the present disclosure is as defined by the appended claims and their equivalents.

## Claims

1. A battery tray assembly (10), comprising:
a tray (11), a mounting space configured to accommodate a battery module (20) being formed on the tray (11), the tray (11) being provided with a detection port (111), and the tray (11) being configured to be insulated from the battery module (20); and
an electrically conductive member (12), at least a part of the electrically conductive member (12) being arranged inside the tray (11), the electrically conductive member (12) being electrically connected to a preset potential point, and at least a part of the electrically conductive member (12) being exposed at the detection port (111) to detect whether an electrically conductive medium is present in the detection port (111).

2. The battery tray assembly (10) according to claim 1, wherein the tray (11) comprises:
a base plate (112), wherein the detection port (111) is formed on the base plate (112); and
a side plate (113), wherein the side plate (113) is arranged on an outer periphery of the base plate (112), and the mounting space configured to accommodate the battery module (20) is defined by the side plate (113) and the base plate (112).

3. The battery tray assembly (10) according to claim 1 or 2, further comprising: a frame (13), wherein the frame (13) is provided on at least a part of an outer periphery of the tray (11), at least a part of the electrically conductive member (12) extends to the frame (13) and is electrically connected to the frame (13), and the frame (13) is configured as a grounding member.

4. The battery tray assembly (10) according to any one of claims 1 to 3, wherein the electrically conductive member (12) comprises:
an extension portion (121), wherein the extension portion (121) is formed in the base plate (112), and at least a part of the extension portion (121) faces the detection port (111) so as to be exposed at the detection port (111); and
a connection portion (122), wherein one end of the connection portion (122) is connected to the extension portion (121), and another end of the connection portion (122) extends to the side plate (113) and is electrically connected to the frame (13).

5. The battery tray assembly (10) according to any one of claims 1 to 4, wherein a plurality of detection ports (111) are configured, wherein the extension portion (121) extends in a first direction, the plurality of detection ports (111) are sequentially arranged in the first direction, and the extension portion (121) respectively corresponds to the plurality of detection ports (111).

6. The battery tray assembly (10) according to any one of claims 1 to 5, wherein a support rib (114) projecting toward the mounting space is formed on the base plate (112), and the support rib (114) is configured to support the battery module (20) and space the battery module (20) apart from a bottom wall of the mounting space.

7. The battery tray assembly (10) according to any one of claims 1 to 6, wherein at least a part of the electrically conductive member (12) is arranged in the tray (11) by integral molding.

8. A battery pack (1), comprising:
a battery tray assembly (10), the battery tray assembly (10) being configured as the battery tray assembly (10) according to any one of claims 1 to 7; and
a battery module (20), the battery module (20) being arranged in the mounting space.

9. The battery pack (1) according to claim 8, wherein the battery module (20) comprises a plurality of battery cores (21), and one of the detection ports (111) faces an end portion of one of the battery cores (21) in an extending direction of the battery core (21).

10. The battery pack (1) according to claim 8 or 9, wherein a thickness of the battery core (21) is defined as a, a dimension of the detection port (111) in a thickness direction of the battery core (21) is defined as b, and a>b.

11. The battery pack (1) according to any one of claims 8 to 10, wherein a thickness a of the battery core (21) and a dimension b of the detection port (111) in a thickness direction of the battery core (21) satisfy: 0.3a<b≤0.7a.

12. A vehicle, comprising the battery pack (1) according to any one of claims 8 to 11.
